(19) Europäisches Patentamt
European Patent Office
Office européen des brevets

(11)  **EP 2 877 626 B1**

(12)  **EUROPEAN PATENT SPECIFICATION**

(45) Date of publication and mention
of the grant of the patent:
**05.07.2023  Bulletin 2023/27**

(51) International Patent Classification (IPC):
**D06N 5/00** *(2006.01)*      **E04D 5/10** *(2006.01)*
**E04D 5/02** *(2006.01)*      **B32B 11/10** *(2006.01)*

(21) Application number: **13741668.1**

(22) Date of filing: **19.07.2013**

(52) Cooperative Patent Classification (CPC):
**E04D 5/02; B32B 11/10; D06N 5/003; E04D 5/10;**
B32B 2255/02; B32B 2255/26; B32B 2307/416;
B32B 2307/7265; B32B 2307/73; B32B 2419/06

(86) International application number:
**PCT/DK2013/050244**

(87) International publication number:
**WO 2014/015876 (30.01.2014 Gazette 2014/05)**

(54) **WATER PROOFING MEMBRANE, AND A METHOD FOR MAKING A WATER PROOFING MEMBRANE**

WASSERFESTE MEMBRAN UND VERFAHREN ZUR HERSTELLUNG EINER WASSERFESTEN MEMBRAN

MEMBRANE DE PROTECTION VIS-À-VIS DE L'EAU, ET PROCÉDÉ POUR RÉALISER UNE MEMBRANE DE PROTECTION VIS-À-VIS DE L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2012  DK 201270455**

(43) Date of publication of application:
**03.06.2015  Bulletin 2015/23**

(73) Proprietor: **BMI Group Danmark ApS
9400 Nørresundby (DK)**

(72) Inventors:
• **BADER, Séverine
F-72320 Vibraye (FR)**
• **DUJEANCOURT, Franck
F-37270 Saint Martin le Beau (FR)**
• **VIDAL, Florence
69450 Saint Cyr au Mont d'Or (FR)**
• **MADEC, Yves
F-41100 Vendôme (FR)**

(74) Representative: **Stoffregen, Hans-Herbert
Patentanwalt Dipl.-Phys.
Dr. Hans-Herbert Stoffregen
Friedrich-Ebert-Anlage 11 b
63450 Hanau (DE)**

(56) References cited:
EP-A1- 1 252 386      EP-A1- 1 985 775
WO-A1-2012/073224    WO-A2-02/46550
WO-A2-2004/070107

**Description**

FIELD OF THE INVENTION

The present invention relates to a water proofing membrane, comprising a fibre layer and carrying a bituminous mass on one side, the other side carrying a layer of a first substance comprising an acrylic polymer, mixed with titanium dioxide.

BACKGROUND OF THE INVENTION

Such a waterproofing membrane is known from WO 2004/070107. For manufacturing the known membrane, the bituminous mass is applied to the one side of the structure where on the other side a cover layer formed by a substance comprising particulate titanium oxide and an acrylic polymer has been applied. The substance is applied as a coating to the fiber layer before the bituminous mass is applied. The acrylic polymer reduces exudation, as discussed also in EP 876 532 and EP 1 252 386, which would otherwise give rise to brown stains forming on the upper side of the membrane. The acrylic polymer also forms to some extent a barrier against ultraviolet rays so that the latter cannot easily reach the bituminous mass. Therefore the bituminous mass keeps its waterproofing and protective properties for a longer time and exudation is reduced in that substantially less oil of the bituminous mass will migrate through the membrane to the upper side when in use. In such a manner, less pollution is provoked as the oil will remain in the bituminous mass and not mix with rain water.

As standards have changed it is sometimes preferred that water proofing membranes, when applied to a roof, have reflective properties in order to reflect incident sunlight and cause in such a manner less heat to be absorbed by the bituminous mass and the building structure covered by the waterproofing membrane. Hence, WO 2004/070107 proposes that the aforementioned acrylic polymer should comprise titanium dioxide, which is an appropriate reflective material, to be integrated in the acrylic polymer matrix which is applied to the surface of the fiber layer and which penetrates partially therein before the bituminous mass is applied. The presence of titanium dioxide in the substance brings about a white surface of the membrane thus leading to lower temperatures reached by the bituminous mass when exposed to sunlight. This enables in its turn use of the bituminous mass with a further reduced risk of oil migration, or exudation, and the titanium dioxide and the UV resistant acrylic polymer are anchored in the structure and cannot be easily removed for example by the rain. The coating of the aqueous mixture of the acrylic polymer and the titanium dioxide is applicable by impregnation or induction to the structure, thus causing a structural bound between the layer and the structure.

OBJECT OF THE INVENTION

For cost and environment reasons it is desirable to reduce as much as possible the use of the acrylic polymer. Laboratory testing may be performed whereby the membrane is subjected to various degrees of solar exposure, and the amount of acrylic polymer is selected such that exudation will likely not occur. However, in practical use of the membrane local brown stains may sometimes nevertheless appear on the visible surface, due to oils locally migrating from the opposite side of the membrane.

The present inventors have found that this exudation problem arises through a strong local or spot-wise heat absorption, and have identified the cause to be dark spots of dirt that appear on the upper side of the membrane after some time of use due to its exposure to the environment. In fact, over the time dirt in the form of particles settling on the entire surface of the membrane will lead to a darkening of the membrane, reducing the reflective effect of the titanium dioxide. Such a darkening, whether it is spot-wise or a uniform darkening across the entire surface, leads to an increased heat absorption and, hence, to the risk of a consequential oil migration leading to brown spots that in themselves will make the problem of heat absorption worse over time.

Hence, an object of the invention is to seek to eliminate or reduce the tendency of oil migration while allowing for a possible reduction in the thickness of the layer of acrylic polymer/titanium dioxide.

This object is solved by a waterproofing membrane comprising a structure incorporating a fibre layer and carrying a bituminous mass on one side, the other side carrying a layer of a first substance comprising an acrylic polymer, mixed with titanium dioxide, wherein the first substance comprises between 10% and 40% by dry weight of said acrylic polymer, between 4% and 40% by dry weight of said titanium oxide, and at least 1% by dry weight of a transparent or translucent hydrophobic material chosen from the group consisting of polyethylene, polysiloxanes emulsions, fluorosurfactants, and silicone, said hydrophobic material being selected such that a drop of liquid water in contact with said surface (S) of the membrane has a contact angle $\theta_c$ , measured in accordance with contact angle meter (name of test) in the order of 93°-100°, and said layer defining a surface (S) of said membrane.

## SUMMARY OF THE INVENTION

The inventors have found that by adding water-repellent properties to the membrane, dirt which may otherwise give rise to the aforementioned stains, is more easily washed away from the membrane surface, thus reducing the tendency of the formation of local brown spots due to migrating oils that darken the white surface of the membrane. Hence, with the invention local exudation is less likely to occur.

More specifically, according to the invention on the side opposite the bituminous mass there is carried a layer of a first substance comprising between 10% and 40% by dry weight of acrylic polymer mixed with between 4% and 40%, preferably between 20% and 40%, by dry weight of titanium dioxide and at least 1% by dry weight of a transparent or translucent hydrophobic material, said layer defining a surface of the membrane. The layer of the first substance may have been applied as a uniform layer, and preferably has a thickness of 100 $\mu$m -200 $\mu$m. The invention also relates to a method of making a water proofing membrane including the aforementioned layer of a first substance, including the steps of i) preparing the first substance by mixing an acrylic polymer with titanium dioxide and with the hydrophobic material under agitation, preferably by separately adding these ingredients to a mixer, such that the acrylic polymer and the hydrophobic material forms a matrix for the titanium dioxide, and ii) applying a layer of said first substance onto a first side of a fiber layer, and iii) applying a bituminous substance onto a second side of said fiber layer.

The hydrophobic material is selected such that a drop of liquid water in contact with the upper surface of the membrane has a contact angle $\theta_c$ greater than 90°, as measured according to contact angle meter (optical tensiometer), preferably greater than 95°. The contact angle quantifies the wettability of the solid surface by a liquid: if the contact angle is large, the drop of liquid will bead up. Highly hydrophobic surfaces resulting from the use of low surface energy materials may have water contact angles as high as ~120°. The hydrophobic material is chosen from the group consisting of polyethylene, polysiloxanes emulsions, fluorosurfactants and silicone.

Preferably, the first substance comprises between 1% and 5% by dry weight of the hydrophobic material.

The first substance may comprise between 1% and 5% by dry weight of a polyurethane polymer, in order to decrease water absorption and increase outdoor durability further.

According to one embodiment of the waterproofing membrane according to the invention, the first substance may comprise between 30% and 50%, preferably approximately 40%, by dry weight, of mineral filler being a mixture of talc, calcium carbonate and aluminium hydroxide.

Calcium carbonate is a suitable filler which does not adversely affect the reflective properties of titanium dioxide.

The bituminous mass may include an Atactic Polypropylene (APP), an Atactic Poly Alpha Olefin (APAO) or a Thermoplastic Polyolefin (TPO). The bituminous mass may comprise SBS.

The fibre layer, such as for example a glass fibre, could by way of example be a non-woven as well as a woven structure. The structure could also be a composite structure formed by glass fibres and a glass grid, a polyester grid or non-woven polyester. A removable foil may be applied on the bituminous mass, to allow for the membrane to be rolled-up for storage.

For manufacturing reasons it may be such that, compared to the aforementioned bituminous mass that defines the opposite surface of the membrane, a bituminous material with a different composition, such as to make it more fluid, is used to impregnate the fibre layer as such, although often only the one and same bituminous mass will also impregnate the fibre layer.

The acrylic polymer composition referred to may be of one brand; alternatively the acrylic polymer may be prepared by mixing acrylic polymer products supplied by different manufacturers.

## BRIEF DESCRIPTION OF THE FIGURES

The water-proofing membrane according to the invention will now be described in more detail with regard to the accompanying figures. The figures show one way of implementing the present invention and is not to be construed as being limiting to other possible embodiments falling within the scope of the attached claim set.

Fig. a is a schematic cross-sectional view of a first embodiment of the membrane of the invention,

Fig. b is a schematic cross-sectional view of another membrane that does not fall within the appended claims,

Fig. c is a schematic cross-sectional view illustrating a welded overlap between two membranes as shown in fig. b, and

Fig. d illustrates the conventional definition of certain parameters used in the present text.

## DETAILED DESCRIPTION OF AN EMBODIMENT

Fig. a shows a waterproofing membrane 1 comprising a structure incorporating a fibre layer 10 and carrying a bituminous mass 15 on the side to be arranged in contact with a building structure, the other side carrying a layer 20 of a substance comprising acrylic polymer mixed with titanium dioxide and a transparent or translucent hydrophobic material, the layer 20 defining the surface S of the membrane 1 that is exposed to the weather. The transparent or translucent nature of the hydrophobic material allows for the titanium dioxide pigment to be distinguishable such that the membrane appears white, the titanium dioxide giving light and heat reflective properties to the membrane. A suitable method of making the substance, also referred to in the appended claim 1 as the "first substance", includes the steps of adding the acrylic polymer, the titanium dioxide and the hydrophobic material separately to a mixer under continued agitation.

An example of a method for applying a bituminous mass to the other side of the fiber layer 10 is given in WO 2004/070107.

The following table gives an example of the composition of a first substance according to the present invention applied as the layer 20 of fig. a, where:

Ecodis P90 (Polyacrylate ammonium salt) is a dispersing agent, Byk024 is a mixture of foam destroying polysiloxanes and hydrophobic solids in polyglycol and acts as an anti-foaming agent,
Luzenac 00C (talc) acts as a filler,
Durcal 1 and Durcal 10 (Calcium carbonate) is a filler to increase hardness of coating,
Martinal On-310 (Aluminium hydroxide) is a fire retardant,
Tronox 2160 (Titanium dioxide) is a white pigment,
Acronal 290D and Joncryl U6336 (an aqueous dispersion of a polymer based on acrylic ester, styrene, and a free aliphatic polyurethane acrylic hybrid, respectively) are binders for outdoor durability and water adsorption,
Texanol (Ester Alcohol (2,2,4-Trimethyl-1,3-pentanediol Monoisobutyrate)) is a coalescent agent,
Fongal PZT (Terbutryn (13.4%) + ZnPT (13.4%)) is a biocide,
Nuosept BMC-422 (a synergistic blend of BIT, MIT and very low levels of CIT) may act as a preservative,
MichemEmulsion 36840E (anionic paraffin / polyethylene wax emulsion) is a surfactant agent, and
Rheotech 3800 (anionic paraffin / polyethylene wax emulsion) is a thickener.

The contact angle, discussed also below, when using the above composition was determined in a laboratory using the contact angle meter to be $\theta_c = 93°$ for the membrane surface S; a similar test without the hydrophobic material (MichemEmulsion 36840E) showed a value of $\theta_c = 81°$.

Addition of the ingredients took place according to the indicated sequence, concluding with addition of the hydrophobic material and then performing an adjustment of the pH-value if required, with the duration of the individual mixing steps being as indicated in the table.

| FORMULATION | Mixing process | Dry weight (%) |
|---|---|---|
| 1. Additives | | |
| **Ecodis P90** | | 0,35 |
| **Water** | 5-10' (disperser) | 0,00 |
| **Byk024** | | 1,35 |
| 2. Fillers and pigments | | |
| **Luzenac 00C** | | 8,81 |
| **Durcal 1** | | 1,76 |
| **Durcal 10** | 35-45' à 2500tr/min (glass beads) | 7,05 |
| **Martinal On-310** | | 25,35 |
| **Tronox 2160** | | 28,14 |
| 3. Binder | | |
| **Acronal 290D** | 5-10' | 20,30 |
| **Joncryl U6336** | | 385 |
| 4. Rest of the additives | | |
| **Texanol** | | 1,49 |
| **Fongal PZT** | 5-10' | 0,55 |
| **Nuosept BMC-422** | | 0,01 |
| **MichemEmulsion 36840E** | | 1,00 |
| 5. Adjustment (Visco, pH, dry content) | | |
| **Water Ammonia** | ES=75±1% pH=8-9 FILTRATION | |

(continued)

| FORMULATION | Mixing process | Dry weight (%) |
|---|---|---|
| Rheotech 3800 | Visco=25000-3000cps | |

Fig. b shows a water proofing membrane that does not fall within the appended claims and which comprises a structure incorporating a fibre layer 10 and carrying a bituminous mass 15 on one side, the other side carrying a first layer 25 of a second substance different from the substance referred to above with reference to fig. a and comprising an acrylic polymer mixed with titanium dioxide, such as in the proportions disclosed in WO2004/070107 (including table 1 and claims 1 and 2 therein), and a second layer 28 of a transparent or translucent hydrophobic material on the second substance, the hydrophobic material, which may have been chosen from the group consisting of carnauba, polyethylene, paraffin wax emulsions, polysiloxanes emulsions and fluorosurfactants, having been applied as a uniform layer and defining the upper surface S of the membrane 1 that is exposed to the weather.

Fig. c illustrates a welded overlap between two membranes as shown in fig. b.

Referring now to fig. d and denoting the solid/vapor interfacial energy as $\gamma_{SG}$, the solid/liquid interfacial energy as $\gamma_{SL}$ and the liquid/vapor interfacial energy (i.e. the surface tension) as $\gamma$, Young's equation requires the following to be satisfied in equilibrium:

$$0 = \gamma_{SG} - \gamma_{SL} - \gamma \cos \theta_C$$

where $\theta_c$ is the contact angle.

The contact angle is the angle, conventionally measured through the liquid, at which a liquid interface meets a solid surface. It quantifies the wettability of the solid surface by a liquid: if the contact angle is small, a drop of the liquid will spread on the solid; if the contact angle is large, the drop of liquid will bead up. If the molecules of a liquid are strongly attracted to the molecules of a solid then a drop of the liquid will completely spread out on the solid surface, corresponding to a contact angle of 0°. Weaker attractions between liquid and solid molecules will result in higher contact angles. Generally, if the water contact angle is larger than 90°, the solid surface is considered hydrophobic.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

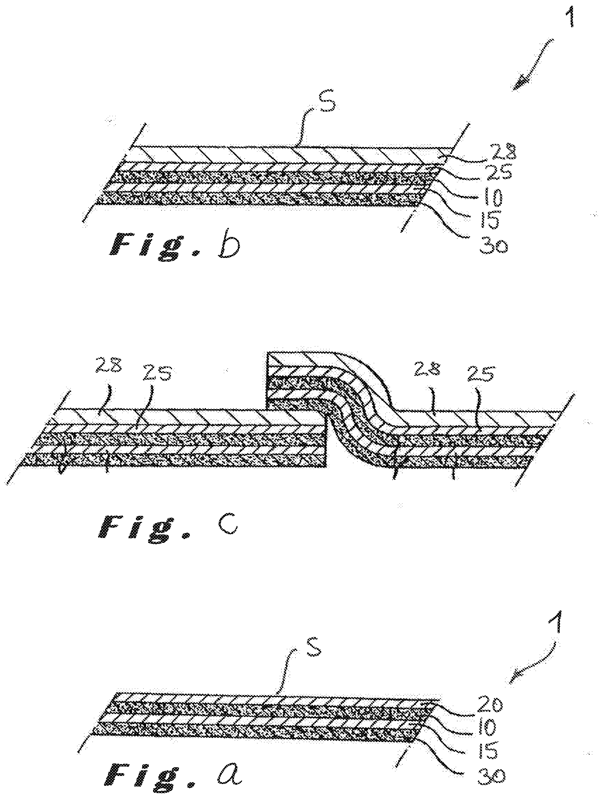

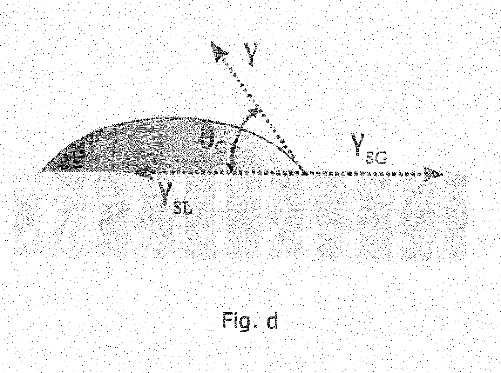

**Claims**

1. A waterproofing membrane (1) comprising a structure incorporating a fibre layer (10) and carrying a bituminous mass (15) on one side, the other side carrying a layer (20) of a first substance comprising an acrylic polymer, mixed with titanium dioxide, wherein the first substance comprises between 10% and 40% by dry weight of said acrylic polymer, between 4% and 40% by dry weight of said titanium oxide, and at least 1% by dry weight of a transparent or translucent hydrophobic material, chosen from the group consisting of polyethylene, polysiloxanes emulsions, fluorosurfactants, and silicone, said hydrophobic material being selected such that a drop of liquid water in contact with said surface (S) of the membrane (1) has a contact angle $\theta_c$ , measured in accordance with contact angle meter (name of test) in the order of 93°-100°, and said layer (20) defining a surface (S) of said membrane (1).

2. The waterproofing membrane of claim 1, wherein said layer (20) of said first substance comprising between 30g/m$^2$ and 120g/m$^2$ of said acrylic polymer, between 12g/m$^2$ and 120g/m$^2$ of said titanium dioxide and at least 3g/m$^2$ of said hydrophobic material.

3. The waterproofing membrane according to any of the preceding claims, wherein said first substance comprising between 1% and 5% by dry weight of a polyurethane polymer.

4. The waterproofing membrane according to claim 3, wherein said layer (20) of said first substance comprising between

3g/m$^2$ and 15g/m$^2$ of said polyurethane polymer.

5. The water proofing-membrane according to any of the preceding claims, wherein said first substance comprising between 10% and 25% by dry weight of said acrylic polymer mixed with between 20% and 30% by dry weight of titanium dioxide.

6. The water proofing-membrane according to the preceding claim, wherein said layer (20) of said first substance comprising between 30g/m$^2$ and 75g/m$^2$ of said acrylic polymer and between 60g/m$^2$ and 90g/m$^2$ of said titanium dioxide.

7. The waterproofing membrane according to any of the preceding claims, wherein said first substance comprising between 18% and 23% by dry weight of said acrylic polymer and between 25% and 30% by dry weight of said titanium dioxide.

8. The water proofing-membrane according to the preceding claim, wherein said layer (20) of said first substance comprising between 50g/m$^2$ and 70g/m$^2$ of said acrylic polymer and between 75g/m$^2$ and 90g/m$^2$ of said titanium dioxide.

9. The waterproofing membrane according to any of the preceding claims, wherein said first substance comprising between 1% and 5% by dry weight of said hydrophobic material.

10. The water proofing-membrane according to the preceding claim, wherein said layer (20) of said first substance comprising between 3g/m$^2$ and 15g/m$^2$ of said hydrophobic material.

11. The waterproofing membrane according to any of the preceding claims, wherein said first substance further comprising between 30% and 50%, preferably 40%, by dry weight of mineral filler being a mixture of talc, calcium carbonate and aluminium hydroxide.

12. The water proofing-membrane according to claim 13, wherein said layer (20) of said first substance comprising between 90g/m$^2$ and 150g/m$^2$ of said mineral filler.

13. The waterproofing membrane according to any of the preceding claims, wherein said bituminous mass (15) comprises an atactic polypropylene (APP), an atactic poly alpha olefin (APAO) or a thermoplastic polyolefin (TPO).

14. The waterproofing membrane according to any of the preceding claims, wherein said bituminous mass (15) comprises styrene butadiene styrene (SBS).

15. The waterproofing membrane of claim 14, wherein said SBS comprises at least 8% by dry weight of a thermoplastic elastomer.

16. The waterproofing membrane according to any of the preceding claims, including a plastic foil or other protective layer (30) on said bituminous mass (15).

17. A method of making a water proofing membrane (1) with a layer (20) of a first substance according to claim 1, including the steps of i) preparing said first substance by mixing said acrylic polymer as a suspension, dispersion or solution with said titanium dioxide and with said hydrophobic material in liquid form, such that said acrylic polymer and said hydrophobic material form a matrix for said titanium dioxide, ii) applying said first substance as a layer (20) onto a first side of said fiber layer (10), and iii) applying said bituminous substance onto a second side of said fiber layer (10).

18. The method of claim 17, wherein said acrylic polymer, said titanium dioxide and said hydrophobic material are added separately to a mixer under agitation, preferably adding the hydrophobic material lastly.

**Patentansprüche**

1. Wasserfeste Membran (1), umfassend eine Struktur, die eine Faserschicht (10) enthält und auf einer Seite eine bituminöse Masse (15) trägt, wobei die andere Seite eine Schicht (20) aus einer ersten Substanz trägt, die ein Acrylpolymer umfasst, das mit Titandioxid gemischt ist, wobei die erste Substanz zwischen 10 % und 40 %, bezogen auf das Trockengewicht, des Acrylpolymers, zwischen 4 % und 40 %, bezogen auf das Trockengewicht, des Titanoxids und mindestens 1 %, bezogen auf das Trockengewicht, eines transparenten oder durchscheinenden hydrophoben Materials umfasst, ausgewählt aus der Gruppe bestehend aus Polyethylen, Polysiloxanemulsionen, Fluortensiden und Silikon, wobei das hydrophobe Material so ausgewählt ist, dass ein Tropfen flüssigen Wassers in Kontakt mit der Oberfläche (S) der Membran (1) einen Kontaktwinkel θc, gemessen mit einem Kontaktwinkelmessgerät (Name des Tests) in der Größenordnung von 93°-100°, aufweist, und wobei die Schicht (20) eine Oberfläche (S) der Membran (1) definiert.

2. Wasserfeste Membran nach Anspruch 1, wobei die Schicht (20) der ersten Substanz zwischen 30 g/m$^2$ und 120 g/m$^2$ des Acrylpolymers, zwischen 12 g/m$^2$ und 120 g/m$^2$ des Titandioxids und mindestens 3 g/m$^2$ des hydrophoben Materials umfasst.

3. Wasserfeste Membran nach einem der vorhergehenden Ansprüche, wobei die erste Substanz zwischen 1 % und 5 %, bezogen auf das Trockengewicht, eines Polyurethanpolymers enthält.

4. Wasserfeste Membran nach Anspruch 3, wobei die Schicht (20) der ersten Substanz zwischen 3 g/m$^2$ und 15 g/m$^2$ des Polyurethanpolymers enthält.

5. Wasserfeste Membran nach einem der vorhergehenden Ansprüche, wobei die erste Substanz zwischen 10 % und 25 % des Trockengewichts des Acrylpolymers in Mischung mit zwischen 20 % und 30 % des Trockengewichts des Titandioxids enthält.

6. Wasserfeste Membran nach dem vorhergehenden Anspruch, wobei die Schicht (20) der ersten Substanz zwischen 30 g/m$^2$ und 75 g/m$^2$ des Acrylpolymers und zwischen 60 g/m$^2$ und 90 g/m$^2$ des Titandioxids enthält.

7. Wasserfeste Membran nach einem der vorhergehenden Ansprüche, wobei die erste Substanz zwischen 18 % und 23 %, bezogen auf das Trockengewicht, des Acrylpolymers und zwischen 25 % und 30 %, bezogen auf das Trockengewicht, des Titandioxids enthält.

8. Wasserfeste Membran nach dem vorhergehenden Anspruch, wobei die Schicht (20) der ersten Substanz zwischen 50 g/m$^2$ und 70 g/m$^2$ des Acrylpolymers und zwischen 75 g/m$^2$ und 90 g/m$^2$ des Titandioxids enthält.

9. Wasserfeste Membran nach einem der vorhergehenden Ansprüche, wobei die erste Substanz zwischen 1 % und 5 %, bezogen auf das Trockengewicht, des hydrophoben Materials enthält.

10. Wasserfeste Membran nach dem vorhergehenden Anspruch, wobei die Schicht (20) der ersten Substanz zwischen 3 g/m$^2$ und 15 g/m$^2$ des hydrophoben Materials enthält.

11. Wasserfeste Membran nach einem der vorhergehenden Ansprüche, wobei die erste Substanz weiterhin zwischen 30 % und 50 %, vorzugsweise 40 %, bezogen auf das Trockengewicht, an mineralischem Füllstoff, der eine Mischung aus Talk, Calciumcarbonat und Aluminiumhydroxid ist, enthält.

12. Wasserfeste Membran nach Anspruch 13, wobei die Schicht (20) der ersten Substanz zwischen 90 g/m$^2$ und 150 g/m$^2$ des mineralischen Füllstoffs enthält.

13. Wasserfeste Membran nach einem der vorhergehenden Ansprüche, wobei die bituminöse Masse (15) ein ataktisches Polypropylen (APP), ein ataktisches Poly-alpha-Olefin (APAO) oder ein thermoplastisches Polyolefin (TPO) enthält.

14. Wasserfeste Membran nach einem der vorhergehenden Ansprüche, wobei die bituminöse Masse (15) Styrol-Butadien-Styrol (SBS) enthält.

15. Wasserfeste Membran nach Anspruch 14, wobei das SBS mindestens 8 %, bezogen auf das Trockengewicht, eines thermoplastischen Elastomers enthält.

16. Wasserfeste Membran nach einem der vorhergehenden Ansprüche, umfassend eine Kunststofffolie oder eine andere Schutzschicht (30) auf der bituminösen Masse (15).

**17.** Verfahren zur Herstellung einer wasserfesten Membran (1) mit einer Schicht (20) aus einer ersten Substanz nach Anspruch 1, umfassend die Schritte: i) Herstellen der ersten Substanz durch Mischen des Acrylpolymers als Suspension, Dispersion oder Lösung mit dem Titandioxid und mit dem hydrophoben Material in flüssiger Form, so dass das Acrylpolymer und das hydrophobe Material eine Matrix für das Titandioxid bilden, ii) Aufbringen der ersten Substanz als eine Schicht (20) auf eine erste Seite der Faserschicht (10), und iii) Aufbringen der bituminösen Substanz auf eine zweite Seite der Faserschicht (10).

**18.** Verfahren nach Anspruch 17, wobei das Acrylpolymer, das Titandioxid und das hydrophobe Material getrennt in einen Mischer unter Rühren zugegeben werden, wobei das hydrophobe Material vorzugsweise zuletzt zugegeben wird.

## Revendications

**1.** Membrane d'imperméabilisation (1) comprenant une structure incorporant une couche fibreuse (10) et supportant une masse bitumineuse (15) sur un côté, l'autre côté supportant une couche (20) d'une première substance comprenant un polymère acrylique, mélangé à du dioxyde de titane, dans laquelle la première substance comprend entre 10% et 40% en poids sec dudit polymère acrylique, entre 4% et 40% en poids sec dudit oxyde de titane, et au moins 1% en poids sec d'un matériau hydrophobe transparent ou translucide, choisi dans le groupe constitué par le polyéthylène, des émulsions de polysiloxanes, des agents tensioactifs fluorés et du silicone, ledit matériau hydrophobe étant sélectionné de telle sorte qu'une goutte d'eau liquide en contact avec ladite surface (S) de la membrane (1) présente un angle de contact $\theta_c$, mesuré conformément à un capteur d'angle de contact (nom du test) de l'ordre de 93°-100°, et ladite couche (20) définissant une surface (S) de ladite membrane (1).

**2.** Membrane d'imperméabilisation selon la revendication 1, dans laquelle ladite couche (20) de ladite première substance comprend entre 30 g/m$^2$ et 120 g/m$^2$ dudit polymère acrylique, entre 12 g/m$^2$ et 120 g/m$^2$ dudit dioxyde de titane et au moins 3 g/m$^2$ dudit matériau hydrophobe.

**3.** Membrane d'imperméabilisation selon l'une quelconque des revendications précédentes, dans laquelle ladite première substance comprend entre 1% et 5% en poids sec d'un polymère de polyuréthane.

**4.** Membrane d'imperméabilisation selon la revendication 3, dans laquelle ladite couche (20) de ladite première substance comprend entre 3 g/m$^2$ et 15 g/m$^2$ dudit polymère de polyuréthane.

**5.** Membrane d'imperméabilisation selon l'une quelconque des revendications précédentes, dans laquelle ladite première substance comprend entre 10% et 25% en poids sec dudit polymère acrylique mélangé à 20% à 30% en poids sec de dioxyde de titane.

**6.** Membrane d'imperméabilisation selon la revendication précédente, dans laquelle ladite couche (20) de ladite première substance comprend entre 30 g/m$^2$ et 75 g/m$^2$ dudit polymère acrylique et entre 60 g/m$^2$ et 90 g/m$^2$ dudit dioxyde de titane.

**7.** Membrane d'imperméabilisation selon l'une quelconque des revendications précédentes, dans laquelle ladite première substance comprend entre 18% et 23% en poids sec dudit polymère acrylique et entre 25% et 30% en poids sec dudit dioxyde de titane.

**8.** Membrane d'imperméabilisation selon la revendication précédente, dans laquelle ladite couche (20) de ladite première substance comprend entre 50 g/m$^2$ et 70 g/m$^2$ dudit polymère acrylique et entre 75 g/m$^2$ et 90 g/m$^2$ dudit dioxyde de titane.

**9.** Membrane d'imperméabilisation selon l'une quelconque des revendications précédentes, dans laquelle ladite première substance comprend entre 1% et 5% en poids sec dudit matériau hydrophobe.

**10.** Membrane d'imperméabilisation selon la revendication précédente, dans laquelle ladite couche (20) de ladite première substance comprend entre 3 g/m$^2$ et 15 g/m$^2$ dudit matériau hydrophobe.

**11.** Membrane d'imperméabilisation selon l'une quelconque des revendications précédentes, dans laquelle ladite première substance comprend en outre entre 30% et 50%, de préférence 40%, en poids sec de charge minérale constituée d'un mélange de talc, de carbonate de calcium et d'hydroxyde d'aluminium.

**12.** Membrane d'imperméabilisation selon la revendication 13, dans laquelle ladite couche (20) de ladite première substance comprend entre 90 g/m$^2$ et 150 g/m$^2$ de ladite charge minérale.

**13.** Membrane d'imperméabilisation selon l'une quelconque des revendications précédentes, dans laquelle ladite masse bitumineuse (15) comprend un polypropylène atactique (APP), une poly-alpha-oléfine atactique (APAO) ou une polyoléfine thermoplastique (TPO).

**14.** Membrane d'imperméabilisation selon l'une quelconque des revendications précédentes, dans laquelle ladite masse bitumineuse (15) comprend du styrène-butadiène-styrène (SBS).

**15.** Membrane d'imperméabilisation selon la revendication 14, dans laquelle ledit SBS comprend au moins 8% en poids sec d'un élastomère thermoplastique.

**16.** Membrane d'imperméabilisation selon l'une quelconque des revendications précédentes, comprenant une feuille plastique ou autre couche de protection (30) sur ladite masse bitumineuse (15).

**17.** Procédé de fabrication d'une membrane d'imperméabilisation (1) avec une couche (20) d'une première substance selon la revendication 1, comprenant les étapes de i) préparation de ladite première substance en mélangeant ledit polymère acrylique sous forme de suspension, de dispersion ou de solution audit dioxyde de titane et audit matériau hydrophobe sous forme liquide, de telle façon que ledit polymère acrylique et ledit matériau hydrophobe forment une matrice pour ledit dioxyde de titane, ii) application de ladite première substance en une couche (20) sur un premier côté de ladite couche fibreuse (10), et iii) application de ladite substance bitumineuse sur un second côté de ladite couche fibreuse (10).

**18.** Procédé selon la revendication 17, dans lequel ledit polymère acrylique, ledit dioxyde de titane et ledit matériau hydrophobe sont ajoutés séparément à un mélangeur en agitation, de préférence en ajoutant le matériau hydrophobe en dernier lieu.

**Fig. b**

**Fig. C**

**Fig. a**

Fig. d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004070107 A
- EP 876532 A
- EP 1252386 A